# EUROPÄISCHE PATENTSCHRIFT

(11) **EP 0 725 001 B1**
(45) Veröffentlichungstag und Bekanntmachung des Hinweises auf die Patenterteilung: **29.04.1998**
(21) Anmeldenummer: 96101391.9
(22) Anmeldetag: 01.02.1996
(51) Int. Cl.: B62D 5/32

(54) **Hydraulische Lenkeinrichtung mit Stromverstärkung**
Hydraulic steering with flow amplification
Direction hydraulique à amplification de débit

(30) Priorität: 02.02.1995 DE 19503331
(43) Veröffentlichungstag der Anmeldung: 07.08.1996
(73) Patentinhaber: HYDRAULIK NORD GMBH, 19370 Parchim (DE)
(72) Erfinder: Bergmann, Erhard, Dr., D-19079 Mirow (DE); Schildmann, Manfred, D-19370 Parchim (DE); Voss, Gerhard, D-19370 Parchim (DE)
(74) Vertreter: Jaap, Reinhard

(56) Entgegenhaltungen:
- EP-A- 0 388 711
- DE-A- 1 780 333
- DE-B- 1 284 860
- DE-C- 1 291 228
- US-A- 4 364 302
- US-A- 4 838 314

## Beschreibung

Die Erfindung betrifft eine hydraulische Lenkeinrichtung nach dem Oberbegriff des Anspruchs 1.
Solche Lenkeinrichtungen werden insbesondere in langsamfahrenden Fahrzeugen mit hohen Achslasten eingesetzt.

Hydrostatische Lenkeinrichtungen bestehen in der Hauptsache aus einem Drehschiebersteuerventil und einem Orbitverdränger. Das Drehschiebersteuerventil wird aus einer äußeren, im Gehäuse eingepaßten Steuerhülse und einem inneren, konzentrisch angeordneten Steuerkolben gebildet. Der Steuerkolben ist einerseits über ein Zahnnabenprofil mit einem Lenkrad und andererseits über eine Stiftverbindung relativ beweglich mit der Steuerhülse verbunden. Die Steuerhülse ist über eine Stiftverbindung und eine Antriebswelle starr mit dem Läuferzahnrad des Orbitverdrängers verbunden. Der Steuerkolben ist mittels eines Federelementes gegenüber der Steuerhülse lagezentriert. Gegen die Kraft dieses Federelementes sind Steuerkolben und Steuerhülse begrenzt zueinander drehbar. Zwischen dem Drehschiebersteuerventil und dem Orbitverdränger besteht über Kommutatorbohrungen eine hydraulische Verbindung.
Die hydraulische Lenkeinrichtung besitzt Anschlüsse für einen Zulauf, einem Rücklauf und für zwei Zylinderleitungen für den Lenkzylinder.

Diese Lenkeinrichtungen zeichnen sich durch ein hohes Verdrängungsvolumen aus, besitzen aber keine Übersetzungsänderung zwischen Servolenkbetrieb und Notlenkbetrieb. Das bedeutet aber, daß bei einem möglichen Ausfall der Versorgungspumpe die Lenkeinrichtung schlagartig auf Notlenkbetrieb umschaltet und damit die gesamte notwendige Lenkkraft manuell am Lenkrad aufgebracht werden muß. Das ist insbesondere im Straßenverkehr ein Sicherheitsrisiko.
Es gibt deshalb schon seit langem das Bestreben, Lenkeinrichtungen zu schaffen, die in der konkreten Situation des Wechselns von Servolenkbetrieb auf Notlenkbetrieb automatisch auf ein anderes Übersetzungsverhältnis umschalten.

So ist die DE 22 28 531 C2 bekannt, die eine Möglichkeit zum Verändern des Verdrängervolumens pro Lenkradumdrehung aufzeigt.
Diese Lenkeinrichtung besitzt einen Orbitverdränger mit zwei parallel geschalteten Verdrängereinheiten, deren bewegliche Zahnräder mechanisch durch eine Zahnwelle miteinander verbunden sind. In den hydraulischen Verbindungsleitungen zwischen den beiden Verdrängereinheiten sind Umschaltventile angeordnet, die bei Vorhandensein von Drucköl, also im Servolenkbetrieb, beide Verdrängereinheiten verbinden und im Notlenkbetrieb, also bei Ausfall der Versorgungspumpe, eine Verdrängereinheit unwirksam machen.
Durch das verringerte Verdrängungsvolumen wird zwangsläufig die Anzahl der notwendigen Drehungen am Lenkrad zum Erreichen eines bestimmten Einschlags der gelenkten Räder höher, aber die erforderliche Lenkkraft bleibt bei entsprechender Auslegung der Lenkung annähernd konstant und damit vom Fahrzeuglenker beherrschbar.
Allerdings ist der bauliche und damit der Kostenaufwand relativ groß. Auf Grund der komplizierten Gestaltung ist die Lenkeinrichtung auch äußerst störanfällig. Damit beseitigt sie das Sicherheitsrisiko im Straßenverkehr nicht.

In der WO-A-95/23723 des Anmelders (Stand der Technik nach Art. 54(3) und 158 EPÜ) wird eine Lenkeinrichtung mit Übersetzungsänderung beschrieben, bei der einige der Leitungen, die die Dosierpumpe mit einem der Zylinderanschlüsse verbinden, einer Umschalteinheit zugeordnet sind. Diese Umschalteinheit wird von den Drücken vor und nach der Dosierpumpe gesteuert und verbindet die Dosierpumpe in Abhängigkeit dieser Druckverhältnisse im Servobetrieb mit einem der Zylinderanschlüsse und im Notbetrieb mit dem Ablaufanschluß. So sind im Servolenkbetrieb alle Leitungen und im Notlenkbetrieb nur einige der Leitungen an der Ölbereitstellung für den Lenkzylinder beteiligt.
Diese Lenkeinrichtung schaltet mit hoher Sicherheit auf ein anderes, gewolltes Übersetzungsverhältnis um, wenn die Lenkeinrichtung plötzlich im Notlenkbetrieb arbeiten muß.
Alle bisher bekanntgewordenen Lenkeinrichtungen dieser Gattung basieren auf dem Funktionsprinzip, daß im Servolenkbetrieb alle vorhandenen Leitungen oder Kammern an der Ölbereitstellung für den Lenkzylinder beteiligt sind und im Notlenkbetrieb einige der Leitungen oder Kammern abgeschalten sind, also drucklos mit dem Tank verbunden sind. Die Größe des Übersetzungsverhältnisses richtet sich daher immer nach der Anzahl der im Notlenkbetrieb abgeschalteten Leitungen oder Kammern. Danach ergeben sich stufenweise unterschiedliche Übersetzungen. Das bedeutet, daß es bei der Wahl des gewünschten Übersetzungsverhältnisses nicht gelingt, den erforderlichen Krafteinsatz am Lenkrad bei beiden Betriebssystemen gleich groß auszulegen. So muß der Fahrzeugführer in der gefahrvollen Situation beim automatischen Umschalten auf den Notlenkbetrieb sein Lenkverhalten auf eine veränderte Lenkdrehzahl und weiterhin auf eine veränderte Lenkkraft umstellen. Diese Anforderungen an das menschliche Verhalten sind sehr hoch und stellen ein Sicherheitsrisiko dar.
Weiter ist aus der EP 388 711 A1 bekannt, eine Lenkeinrichtung in Open-Center-Ausführung mit einem Bypass zum Verdrängersystem auszurüsten. Dabei wird im Servobetrieb zusätzlich zum Hauptstrom durch den Verdränger ein Nebenstrom am Verdränger vorbei geleitet. Die Größe des Nebenstromes richtet sich nach der Druckdifferenz über der Lenkeinrichtung und nach dem Querschnitt einer variablen Drossel, die vom Steuerkolben und von der Steuerhülse gebildet wird. In der Neutralstellung ist die variable Drossel geschlossen.
Diese Lenkeinrichtung hat im wesentlichen den Nachteil, daß keine echte Sychronisation zwischen dem Drehwinkel am Lenkrad und dem Einschlagwinkel der gelenkten Räder besteht. Die Ursache liegt in der ständigen Abhängigkeit des Gesamtvolumenstromes vom Zulaufstrom, vom Zylinderdruck und der gerade gewählten Lenkdrehzahl.

Eine ähnliche Lenkeinrichtung mit Stromverstärkung ist aus der DE-C-1 291 228 bekannt, bei der zwischen der Servopumpe und dem Steuerventil eine Zuschalteinrichtung angeordnet ist, die aus einem Zuschalthahn und zwei steuerbaren Drosseln gebildet wird. Diese Zuschalteinrichtung führt dem Lenkzylinder einen verhältnisgleichen Zusatzdruckstrom zu.

Es besteht die Aufgabe, eine Lenkeinrichtung der vorliegenden Gattung zu schaffen, die ein stufenlos vorbestimmbares Übersetzungsverhältnis zwischen Servolenkbetrieb und Notlenkbetrieb besitzt und die im Servobetrieb eine größtmögliche Synchronisation zwischen dem Drehwinkel am Lenkrad und dem Einschlagwinkel der gelenkten Räder ermöglicht.

Diese Aufgabe wird durch die kennzeichnenden Merkmale des Hauptanspruchs gelöst.
Eine zweckdienliche Ausgestaltung der Erfindung ergibt sich aus dem Unteranspruch 2.

Mit der erfindungsgemäßen Lösung werden die genannten Nachteile beseitigt. Neben dem Hauptziel, der Erhöhung der Sicherheit bei Lenkeinrichtungen mit Übersetzungsänderung insbesondere beim Umschalten in eine andere Betriebsart, werden weitere Effekte erzielt. So baut die neuartige Lenkeinrichtung recht einfach und widerlegt damit das Vorurteil, daß diese gattungsgemäßen Geräte kompakt und aufwendig sein müssen.

Die Erfindung soll nachstehend an einem Ausführungsbeispiel näher erläutert werden.

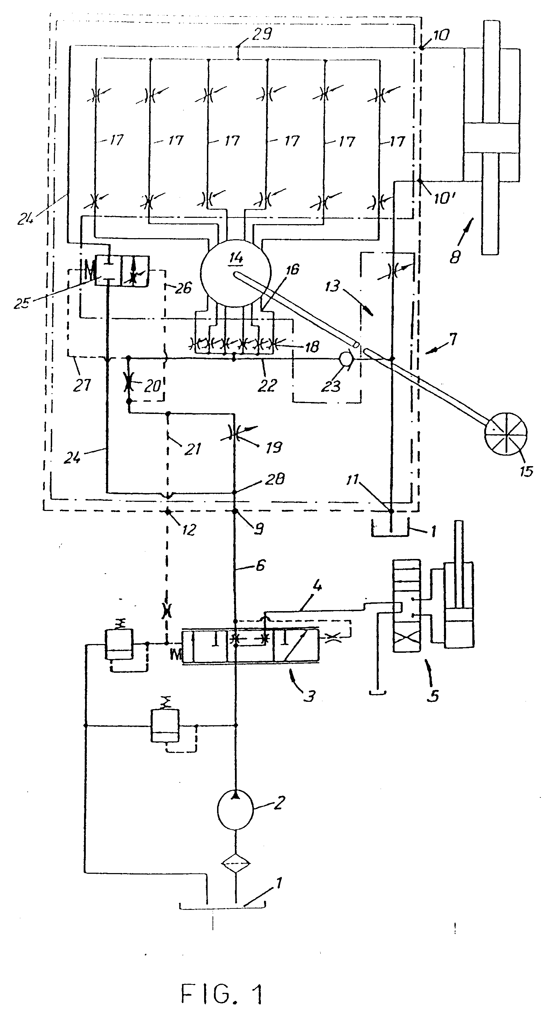

Dazu zeigt
- Fig. 1:: einen vereinfachten Lenkkreislauf in Load-sensing-Ausführung.

Der hydraulische Kreislauf ist aus Gründen der Übersichtlichkeit vereinfacht dargestellt und setzt sich aus einem Lenkkreislauf und einem Arbeitskreislauf zusammen und besteht aus einem Tank 1, einer Versorgungspumpe 2 und einem Stromteilventil 3. Vom Stromteilventil 3 zweigt eine Zulaufleitung 4 für eine Arbeitshydraulik 5 und eine Zulaufleitung 6 für eine Lenkeinrichtung 7 ab. Ein Lenkzylinder 8 ist der Lenkeinrichtung 7 nachgeordnet.
Die Lenkeinrichtung 7 besitzt einen, mit dem Stromteilventil 3 verbundenen Zulaufanschluß 9, zwei Zylinderanschlüsse 10 und 10' für den Lenkzylinder 8, einen mit dem Tank 1 verbundenen Rücklaufanschluß 11 sowie einen Lastsignalanschluß 12, der Verbindung mit der federbelasteten Seite des Stromteilventiles 3 hat.
Die Lenkeinrichtung 7 besteht in der Hauptsache aus einem Steuerventil 13 und einer nach dem Orbitprinzip arbeitenden Dosierpumpe 14 mit einem Außenring mit beispielsweise sieben und einem Läuferzahnrad mit dann sechs Zähnen.
Das Steuerventil 13 ist in einem Gehäuse eingepaßt und besitzt bekanntermaßen einen inneren, von einem Lenkrad 15 ansteuerbaren Steuerkolben und eine äußere, mit dem Rotor der Dosierpumpe 14 mechanisch verbundene Steuerhülse. Steuerkolben und Steuerhülse sind konzentrisch zueinander angeordnet und in einem begrenzten Umfang und gegen die Kraft einer Feder drehbar.
Der Steuerkolben besitzt sechs gleichmäßig am Umfang verteilt angeordnete, parallel wirkende Leitungen 16, die einerseits zum Zulaufanschluß 9 und andererseits zur Eingangsseite der Dosierpumpe 14 Verbindung haben und insgesamt sechs Leitungen 17, die einerseits mit der Ausgangsseite der Dosierpumpe 14 und andererseits zu einem der Zylinderanschlüsse 10 oder 10' Verbindung haben.
Die sechs Leitungen 16 bilden im Zusammenwirken mit Kanälen der Steuerhülse sechs verstellbare Drosseln 18. In der Hauptleitung zwischen dem Zulaufanschluß 9 und den verstellbaren Drosseln 18 sind in Strömungsrichtung eine erste verstellbare Eingangsdrossel 19 und eine Konstantdrossel 20 angeordnet. Zwischen der ersten verstellbaren Eingangsdrossel 19 und der Konstantdrossel 20 zweigt eine Nebenleitung 21 zum Lastsignalanschluß 12 ab. Zwischen der Konstantdrossel 20 und den verstellbaren Drosseln 18 zweigt eine zweite Nebenleitung 22 zum Rücklaufanschluß 11 ab, in der sich ein in Richtung des Rücklaufanschlusses 11 schließendes Rückschlagventil 23 befindet.
Innerhalb der Lenkeinrichtung 7 verläuft eine die Dosierpumpe 14 umgehende Leitung 24, die vor der ersten verstellbaren Eingangsdrossel 19 abzweigt und die hinter der Dosierpumpe 14 wieder in die zum Lenkzylinder führende Hauptleitung einmündet. In dieser Leitung 24 ist ein einseitig federbelastetes und druckabhängig arbeitendes Regelventil 25 angeordnet, das eine Schließstellung und eine regelbare Offenstellung besitzt. Das Regelventil 25 besitzt zwei Steuerleitungen 26 und 27, wobei die nichtfederseitige Steuerleitung 26 mit der Hauptleitung in Strömungsrichtung gesehen vor der Konstantdrossel 20 und die federbelastete Steuerleitung 27 mit der Hauptleitung hinter der Konstantdrossel 20 verbunden sind.

Bei nichtbetätigter Lenkeinrichtung 7 befinden sich die Steuerhülse und der Steuerkolben des Steuerventiles 13 in neutraler Stellung, so daß die erste verstellbare Eingangsdrossel 19 und alle sechs verstellbaren Drosseln 18 geschlossen sind. Da durch die erste verstellbare Eingangsdrossel 19 kein Ölstrom fließt, herrschen in den Steuerleitungen 26 und 27 gleiche Drücke, so daß die Kraft der Druckfeder das Regelventil 25 in seiner Sperrstellung hält.
Das von der Versorgungspumpe 2 gelieferte Öl baut in der Zulaufleitung 6 vor der geschlossenen ersten verstellbaren Eingangsdrossel 19 der Lenkeinrichtung 7 einen Druck auf, der sich als Drucksignal auf die nichtfederbelastete Seite des Stromteilventiles 3 fortpflanzt.
Durch Betätigung des Lenkrades 11 kommt es zur Auslenkung des Steuerkolbens gegenüber der Steuerhülse und damit zur Öffnung der ersten verstellbaren Eingangsdrosseln 19 und der sechs verstellbaren Drosseln 18.
Das im Servolenkbetrieb von der Versorgungspumpe 2 bereitgestelte Öl gelangt über das durch die Druckverhältnisse im Lastsignalkreislauf entsprechend geschaltete Stromteilventil 3 durch die Zulaufleitung 6 zum Zulaufanschluß 9. Von hier strömt das Öl über die erste verstellbare Eingangsdrossel 19, die Konstantdrossel 20 und die sechs verstellbaren Drosseln 18 zur Dosierpumpe 14, wird hier entsprechend der Lenkbetätigung dosiert und über die Leitungen 17 dem Lenkzylinder 8 bereitgestellt.
Auf Grund der Strömungsverhältnisse an der Konstantdrossel 20 stellt sich hier eine Druckdifferenz ein, dessen größerer Druck das Regelventil 25 entgegen der Kraft der Druckfeder in eine definierte Stellung öffnet.

Über den so freigegebenen Querschnitt des Regelventiles 25 fließt parallel zum Hauptstrom ein Nebenstrom, der sich aus der sich einstellenden Druckdifferenz des Hauptstromes zwischen den Abgriffsstellen 28 und 29 ergibt. Die Öffnungscharakteristik des Regelventiles 25 kann so abgestimmt werden, daß das Gesamtverdrängungsvolumen pro Umdrehung am Lenkrad der Lenkeinrichtung 7 über den gesamten Drehzahlbereich annähernd konstant bleibt.
Im Notlenkbetrieb, also bei abgeschalteter Versorgungspumpe 2 ist die Zuleitung 6 drucklos. Die Arbeitshydraulik 5 kann nicht mehr versorgt werden. Das für den Lenkkreislauf notwendige Öl wird jetzt allein durch die manuelle Betätigung des Lenkrades 15 und damit von der Dosierpumpe 14 über die zweite Nebenleitung 22 und dem Rückschlagventil 23 angesaugt und zum Lenkzylinder 8 gefördert. Über die Konstantdrossel 20 fließt kein Strom.
Demzufolge stellt sich keine Druckdifferenz ein. Das Regelventil 25 wird durch die Kraft seiner Druckfeder in seine Schließstellung gedrückt. Damit ist nur der Hauptstrom an der Ölversorgung des Lenkzylinders 8 beteiligt. Das Fördervolumen wird allein durch die Dosierpumpe 14 bestimmt.
Wird beispielsweise eine Dosierpumpe mit einem Fördervolumen von 100 cm³/U verwendet und ist der Zusatzstrom so bemessen, daß er ebenfalls 100 cm³/U beträgt, dann stellen sich im Servolenkbetrieb 200 cm³/U und im Notlenkbetrieb 100 cm³/U Verdrängungsvolumen ein. Somit beträgt das Übersetzungsverhältnis 2:1. In anderen Fällen ist jedes andere Übersetzungsverhältnis stufenlos vorherbestimmbar.

## Patentansprüche

1. Hydraulische Lenkeinrichtung mit Stromverstärkung, die einerseits über einem Zulaufanschluß (9) mit einer Versorgungspumpe (2) und andererseits über Zylinderanschlüsse (10, 10') mit einem Lenkzylinder (8) verbunden ist und die eine Hauptleitung vom Zulaufanschluß (9) zu jeweils einem der Zylinderanschlüsse (10, 10') ausbildet, wobei in der Hauptleitung ein Steuerventil (13) und eine Dosierpumpe (14) angeordnet sind, wobei das Steuerventil (13) einen inneren, vom Lenkrad (15) ansteuerbaren Steuerkolben und eine äußere, mit dem Rotor der Dosierpumpe (14) mechanisch verbundene Steuerhülse besitzt und der Steuerkolben und die Steuerhülse begrenzt zueinander drehbar sind und miteinander und mit der Dosierpumpe (14) korrespondierende Leitungen (16) besitzen, wobei in der Hauptleitung vor dem Steuerventil (13) eine in Neutralstellung geschlossene und durch die Lenkbewegung verstellbare Eingangsdrossel (19) angeordnet ist und die Dosierpumpe (14) weiterhin Ablaufleitungen (17) besitzt, die mit den Zylinderanschlüssen (10, 10') verbunden sind,
**dadurch gekennzeichnet**, daß die Dosierpumpe (14) und der jeweilige Zylinderanschluß (10, 10') ständig über alle Ablaufleitungen (17) verbunden sind, daß sich in der Hauptleitung vor der Dosierpumpe (14) eine Konstantdrossel (20) befindet und daß eine das Steuerventil (13) und die Dosierpumpe (14) umgehende Leitung (24) besteht, die vor der verstellbaren Eingangsdrossel (19) abzweigt und die hinter der Dosierpumpe (14) in die zum Lenkzylinder (8) führenden Ablaufleitungen (17) einmündet und in der ein einseitig federbelastetes und druckabhängig arbeitendes Regelventil (25) angeordnet ist und das Regelventil (25) über zwei Steuerleitungen (26, 27) von der Druckdifferenz über der Konstantdrossel (20) in der Art gesteuert wird, daß der höhere Steuerdruck der Druckfeder entgegenwirkt.

2. Lenkeinrichtung nach Anspruch 1,
**dadurch gekennzeichnet**, daß das Regelventil (25) eine durch die Kraft einer Druckfeder belastete Schließstellung und eine regelbare Offenstellung besitzt.

## Claims

1. Hydraulic steering device with flow amplification, which is connected on one side to a supply pump (2) via an intake connection (9) and on the other side to a steering cylinder (8) via cylinder connections (10, 10') and which forms a main line from the intake connection (9) to one of the cylinder connections (10, 10'), wherein a control valve (13) and a metering pump (14) are disposed in the main line, the control valve (13) has an inner control piston which can be actuated by the steering wheel (15) and an outer control sleeve which is mechanically connected to the rotor of the metering pump (14), the control piston and the control sleeve can be rotated within limits with respect to one another and have lines (16) corresponding with one another and with the metering pump (14), a feed throttle (19), which is closed in the neutral position and can be adjusted by the steering movement, is disposed before the control valve (13) in the main line, and the metering pump (14) also has outlet lines which are connected to the cylinder connections (10, 10'), characterised in that the metering pump (14) and the respective cylinder connection (10, 10') are constantly connected via all the outlet lines (17), that a fixed throttle (20) is located before the metering pump (14) in the main line, and that a line (24) which bypasses the control valve (13) and the metering pump (14) is provided, which line branches off before the adjustable feed throttle (19) and joins the outlet lines (17) leading to the steering cylinder (8) after the metering pump (14) and in which a pressure-dependent regulating valve (25) spring-loaded on one side is disposed, and the regulating valve (25) is controlled via two control lines (26, 27) by the pressure difference due to the fixed throttle (20) such that the higher control pressure opposes the compression spring.

2. Steering device according to claim 1, characterised in that the regulating valve (25) has a closed position which is loaded by the force of a compression spring and an open position which can be regulated.

## Revendications

1. Mécanisme de commande hydraulique avec renforcement du flux, qui est relié d'une part par un raccordement d'entrée (9) à une pompe d'alimentation (2) et, d'autre part, par des raccordements de cylindre (10, 10') à un vérin de commande (8) et qui forme une conduite principale depuis le raccordement d'entrée (9) à chacun des raccordements de cylindre (10, 10'), dans lequel dans la conduite principale sont placées une vanne-pilote (13) et une pompe doseuse (14), tandis que la vanne-pilote (13) possède un piston distributeur interne, pouvant être commandé par la roue directrice (15) et un manchon de commande extérieur relié mécaniquement au rotor de la pompe doseuse (14) et le piston de commande et le manchon de commande sont mobiles en rotation de manière limitée l'un par rapport à l'autre et possèdent ensemble et avec la pompe doseuse (14) des conduites (16) correspondantes, tandis que dans la conduite principale est placé avant la vanne-pilote (13) un étranglement d'arrivée (19) fermé en position neutre et pouvant être réglé par le mouvement de commande et la pompe de dosage (14) possède en outre des conduites de décharge (17) qui sont reliées avec les raccordements de cylindre (10, 10'),
caractérisé en ce que
la pompe de dosage (14) et le raccordement de cylindre respectif (10, 10') sont reliés de manière permanente par l'intermédiaire de tous les conduits de décharge (17), en ce qu'il se trouve dans la conduite principale avant la pompe de dosage (14) un étranglement constant (20) et en ce qu'il existe une conduite (24) contournant la vanne-pilote (13) et la pompe doseuse (14), qui bifurque en avant de l'étranglement réglable d'arrivée (19) et qui débouche derrière la pompe de dosage (14) dans les conduites de décharge (17) conduisant au vérin de commande (8) et dans laquelle est montée une soupape de réglage (25) chargée par ressort d'un côté et travaillant en fonction de la pression et la soupape de réglage (25) est commandée par l'intermédiaire de deux conduites pilotes (26, 27) par la différence de pression sur l'étranglement constant (20), de manière que la pression de commande plus élevée s'oppose au ressort de pression.

2. Mécanisme selon la revendication 1,
caractérisé en ce que
la soupape de réglage (25) possède une position de fermeture chargée par la force d'un ressort de pression et une position d'ouverture réglable.
